# EUROPEAN PATENT APPLICATION

(11) **EP 2 665 014 A1**
(43) Date of publication of application: **20.11.2013**
(21) Application number: 12168591.1
(22) Date of filing: 18.05.2012
(51) Int. Cl.: G06K 7/00, G06K 7/10, G06F 3/033

(54) **Near-field communication input device including near-field communication mouse pad and mouse and related methods**

(71) Applicant: BlackBerry Limited, Waterloo, ON N2L 3W8 (CA)
(72) Inventor: Burrell, Douglas James Arthur, Waterloo, Ontario N2L 3W8 (CA); Walker, David Ryan, Waterloo, Ontario N2L 3W8 (CA)
(74) Representative: Fennell, Gareth Charles

(57) **Abstract**

A near-field communication (NFC) input device may include an NFC mouse pad to be coupled to an electronic device. The NFC mouse pad may include a first NFC device. The NFC input device may further include an NFC mouse configured to generate movement data based upon movement relative to the NFC mouse pad. The NFC mouse may include a second NFC device to wirelessly communicate the movement data to the first NFC device for the electronic device.

## Description

### Technical Field

The present disclosure generally relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a plan view of an NFC system in accordance with an example embodiment.

FIG. 2 is a schematic block diagram of the NFC system of FIG. 1.

FIG. 3 is a plan view of an NFC system in accordance with another example embodiment.

FIG. 4 is a schematic block diagram of the NFC system of FIG. 3.

FIG. 5 is a schematic block diagram illustrating additional components that may be included in the electronic device of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

In accordance with an example embodiment, a near-field communication (NFC) input device may include an NFC mouse pad to be coupled to an electronic device. The NFC mouse pad may include a first NFC device. The NFC input device may further include an NFC mouse configured to generate movement data based upon movement relative to the NFC mouse pad. The NFC mouse may include a second NFC device to wirelessly communicate the movement data to the first NFC device for the electronic device.

The first NFC device may be configured to provide power via the second NFC device for the NFC mouse. The NFC mouse may further include a mouse housing, and an optical sensing circuit carried by the mouse housing and coupled to the second NFC device. The optical sensing circuit may be configured to generate the movement data, for example.

The first NFC device may include a first NFC antenna and a first NFC transceiver coupled thereto, for example. The second NFC device may include a second NFC antenna and a second NFC transceiver coupled thereto.

The NFC mouse pad may include a free-standing substrate, for example. The first NFC device may be carried by the free-standing substrate.

The NFC mouse pad may include a substrate defining a panel of a case for the electronic device, for example. The first NFC device may be carried by the substrate.

A method aspect is directed to a method of providing input to an electronic device. The method may include coupling the electronic device to a near-field communication (NFC) mouse pad include a first NFC device. The method may further include moving an NFC mouse relative to the NFC mouse pad to generate movement data based upon the movement, and wirelessly communicate the movement data to the first NFC device for the electronic device via a second NFC device of the NFC mouse, for example.

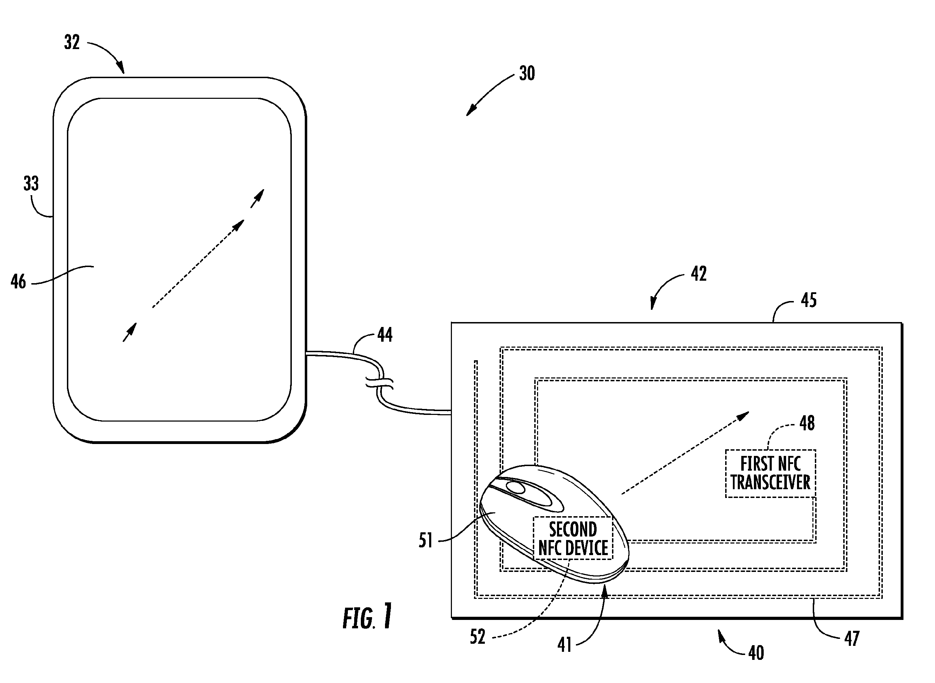

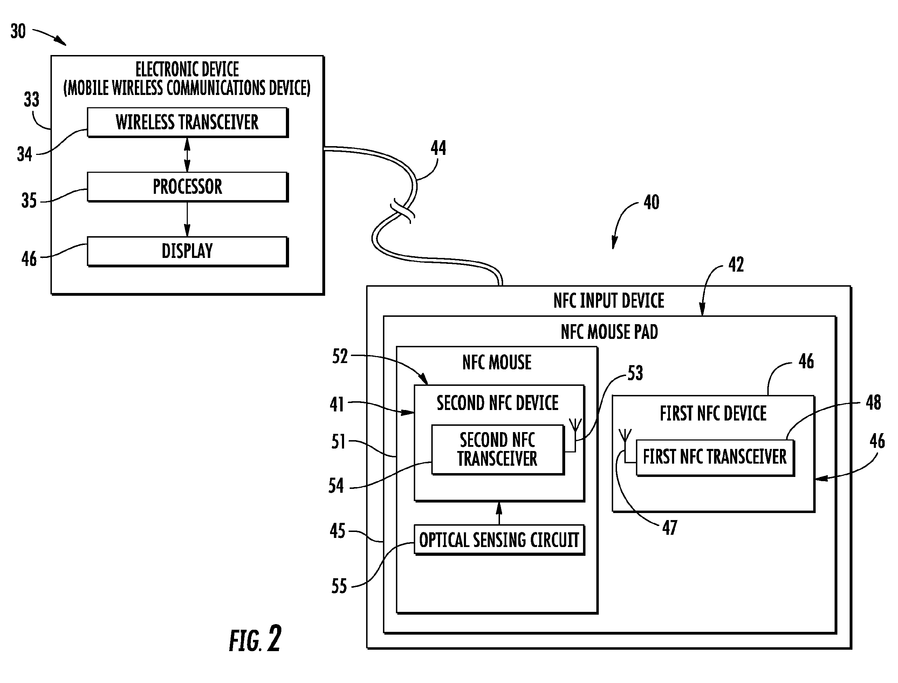

Referring initially to FIGS. 1-2, a near-field communications system **30** includes an electronic device **32** illustratively in the form of a mobile wireless communications device (also referred to a "mobile device" hereinafter). Example electronic devices may include a personal computer, tablet computer, gaming system, or other electronic device, which may or may not be portable or wireless. The mobile wireless communications device **32** may include portable or personal media players (e.g., music or MP3 players, video players, etc.), portable gaming devices, portable or mobile telephones, smartphones, tablet computers, digital cameras, etc.

The electronic device **32** illustratively includes a portable or device housing **33.** A wireless transceiver **34** is also carried by the portable housing **33.** The wireless transceiver **34** may comprise a cellular transceiver, wireless local area network (WLAN) transceiver, or other type of wireless communications transceiver, and may communicate any combination of voice and data, such as, for example, email.

The electronic device **32** includes a display **46** carried by the portable housing **33.** The display **46** may comprise a liquid crystal display (LCD) and may be configured to display information relating to data or voice communications. The display **46** may be in the form of an active display that includes a backlight, for example. The display **46** may display email information, contact information, call information, or information from a website or application. The display **46** may be another type of display, for example, a passive display, and may display other information.

The electronic device **32** also includes a processor **35** that is carried by the portable housing **33** and coupled to the wireless transceiver **34** and the display **46.** The processor **35** may be implemented using hardware (e.g., memory, etc.) and software components, i.e., computer-readable instructions for causing the electronic device **32** to perform the various functions or operations described herein.

The NFC input device **40** that includes an NFC mouse **41** and a NFC mouse pad **42** is coupled to the electronic device **32.** More particularly, the NFC input mouse pad **42** is coupled via a wired interface, for example, via a micro universal serial bus (USB) interface **44.** Of course, the NFC mouse pad **42** may be coupled to the mobile device **32** via another type of wired interface. In some embodiments, the NFC input mouse pad **42** may be coupled to the electronic device **32** via a wireless interface.

The NFC mouse pad **42** includes a freestanding substrate **45.** The freestanding substrate **45** may be a rubber or plastic substrate, for example, and may be flexible. Of course, in other embodiments, the substrate **45** may be rigid.

A first NFC device **46** is carried by the freestanding substrate **45.** The first NFC device **46** includes a first NFC antenna **47** and a first NFC transceiver **48** coupled to the first NFC antenna. The first NFC antenna **47** and the first NFC transceiver **48** may be embedded within the freestanding substrate **45,** for example, so that it is not visible to a user. However, in some embodiments, the first NFC antenna **47** may be carried by an exterior surface of the freestanding substrate **45.**

The first NFC antenna **47** is sized to correspond to the size of the freestanding substrate **45.** More particularly, the first NFC antenna **47** may extend along a periphery of the freestanding substrate **45.** For example, in some embodiments, the first NFC antenna **47** may be spirally wound (e.g., five-times) around an outermost one-inch perimeter of the freestanding substrate **45.** Of course, more than one first NFC antenna may be carried by the freestanding substrate **45** and coupled to the first NFC transceiver **48.**

By way of background, NFC is a short-range wireless communications technology in which NFC-enable devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The NFC mouse **41** includes a mouse housing **51** and a second NFC device **52** carried by the mouse housing. The second NFC device **52** includes a second NFC antenna **53** and a second NFC transceiver **54** coupled to the second NFC antenna. An optical sensing circuit 55 is also carried by the mouse housing **51.** The optical sensing circuit 55 is coupled to the second NFC device **52** and generates movement data for the electronic device **32,** for example, moving a cursor, or other input. For example, the optical sensing circuit **55** may include optical sensors, photodiodes, light emitting diodes, lasers, and other components that may typically be found in an optical or laser mouse, as will be appreciated by those skilled in the art. In some embodiments, the NFC mouse **41** may not include an optical sensing circuit, but rather a mechanical sensing circuit, for example, a tracking ball, to generate the movement data.

The movement data is based upon movement of the NFC mouse **41** relative to the NFC mouse pad **42.** The second NFC device **52** wirelessly communicates, via cooperation between the second NFC antenna **53** and the second NFC transceiver **54,** the movement data to the first NFC device **46,** i.e., NFC mouse pad **42,** for the electronic device **32.** Of course, more than one second NFC antenna 53 may be carried by the mouse housing **51** and coupled to the second NFC transceiver **54.**

In some embodiments, the first NFC device **46** advantageously provides power via the second NFC device **52.** In other words, the NFC mouse **41** operates without batteries, for example, as its power or energy is harvested from the first NFC device **46.** This may be particularly advantageous for reducing battery waste and decreasing overall operating costs. Additionally, by not having any batteries, the NFC mouse **41** may have a reduced size, which may be particularly advantageous in portable applications.

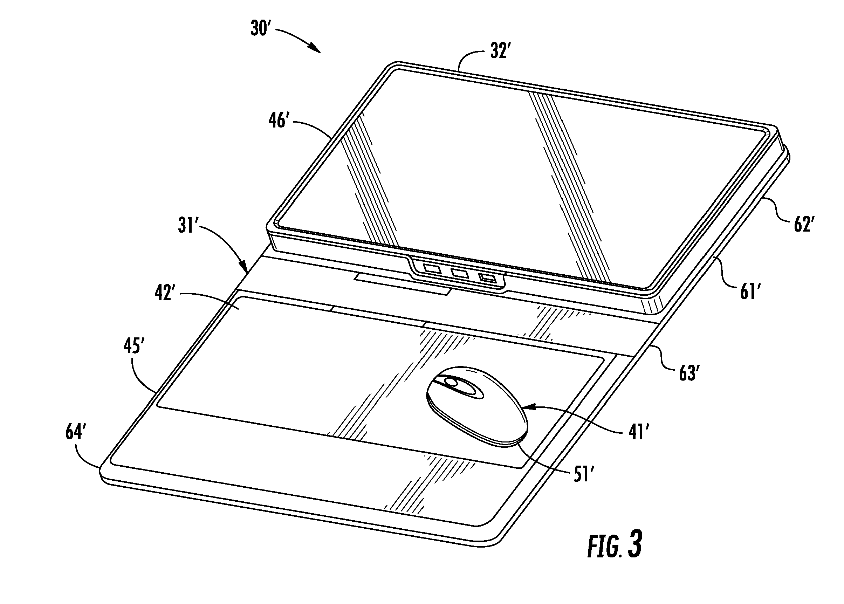

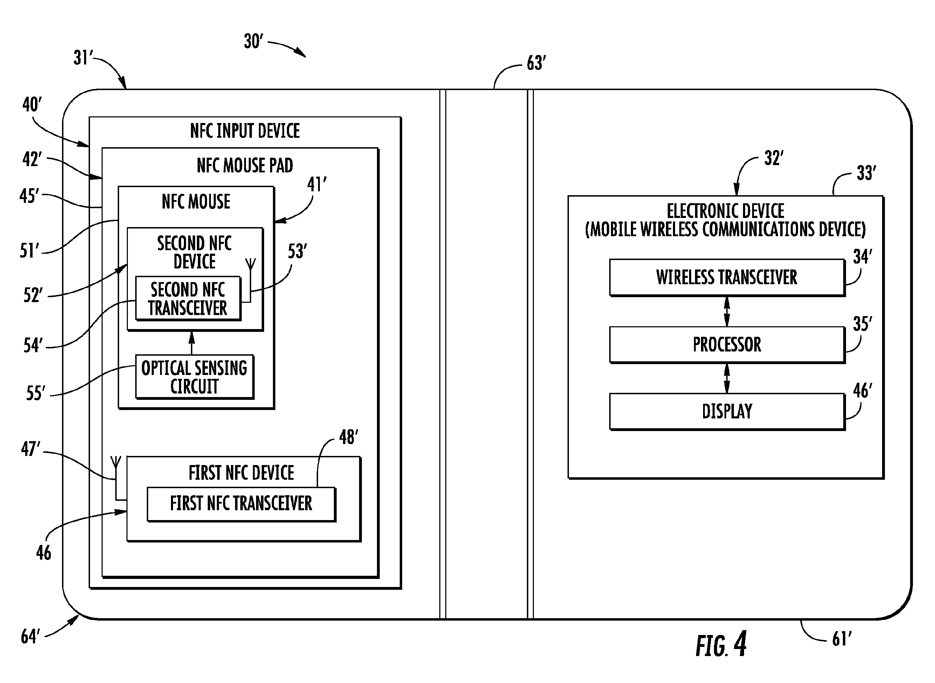

Referring now to FIGS. 3 and 4, in another example embodiment, a carrying case **31**' may carry the mobile device **32**'. The carrying case **31**' is an accessory configured to carry the electronic device **32**'. For example, the carrying case **31**' may be a protective case as will be described in further detail below.

The carrying case **31**' is illustratively a flip-type carrying case that includes a base panel **61**'. A frame **62**' extends outwardly from the base panel **61**'. The electronic device **32**' is carried within the frame **62**'. The frame **62**' may provide increased protection for the electronic device **32'** while being carried. In some embodiments, the carrying case **31**' may not include a frame **62**'.

A hinge panel **63**' couples the base panel to a removable cover panel **64**' or lid. More particularly, the hinge panel **63**' advantageously permits the removable cover panel **64**' to be moved to cover the display **46**' of the electronic device **32**'. The removable cover panel **64**' may provide increased protection from damage or wear and tear, for example, while be carried, but not in use.

As will be appreciated by those skilled in the art, the removable cover panel **64**' may be removed to expose the display **46**' of the electronic device **32**' during use. Of course, the removable cover panel **64**' may cover other parts of the electronic device 32'. Additionally, in some embodiments, the removable cover panel **64**' may include cover hinge panels so that it may be folded to a reduced size, for example, and may support the carrying case **31**' while in use.

The removable cover panel **64**' may include a substrate **45**' that is part of the NFC mouse pad **42**'. The first NFC device **46**', including the first NFC antenna **47**' and first NFC transceiver **48'** may be embedded within the substrate **45**' of the removable cover panel **64**'. The NFC mouse **41'** may be moved over or relative to the removable cover panel **64**' to generate the movement data.

While the NFC mouse pad **42'** described above is part of the removable cover panel **64**', it should be understood that the NFC mouse pad may be included within other parts of the carrying case **31**'. For example, the NFC mouse pad **42**' may be part of an extension panel that folds or extends from any of the base panel **61**', the removable cover panel **64**', and the hinge panel **63**'.

A method aspect is directed to a method of providing input to an electronic device **32**. The method includes coupling the electronic device **32** to a near-field communication (NFC) mouse pad **42** that includes a first NFC device **46.** The method also includes moving an NFC mouse **41** relative to the NFC mouse pad **42** to generate movement data. The method also includes moving the NFC mouse **41** relative to the NFC mouse pad **42** to wirelessly communicate the movement data to the first NFC device **46** for the electronic device **32** via a second NFC device **52** of the NFC mouse **41.**

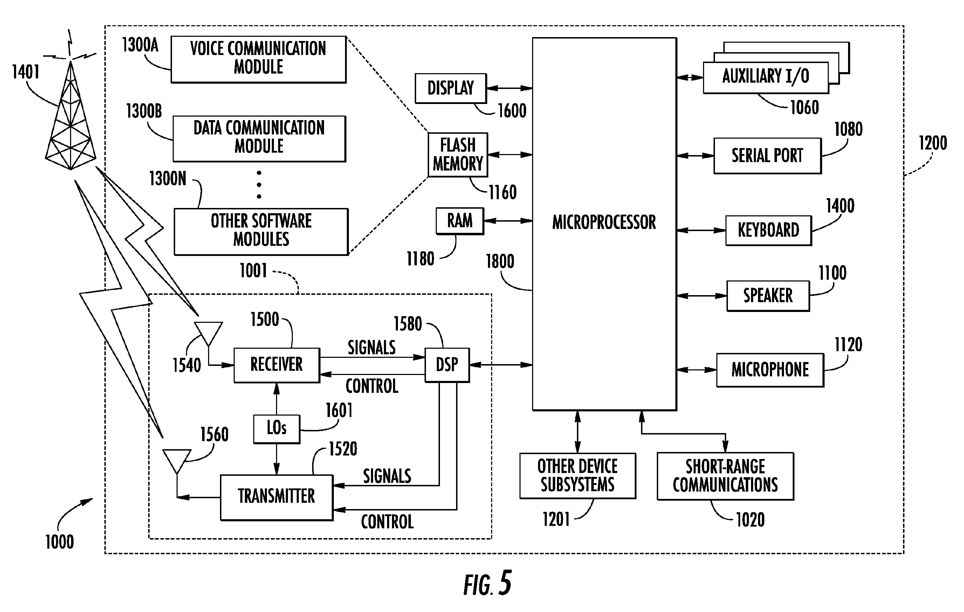

Exemplary components that may be used in various embodiments of the above-described mobile wireless communications device are now described with reference to an exemplary electronic device **1000** shown in FIG. 5. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the electronic device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the electronic device **1000** are shown schematically in FIG. 5. These include a communications subsystem **1001;** a short-range communications subsystem 1020; the keypad **1400** and the display **1600,** along with other input/output devices **1060, 1080, 1100** and 1120; as well as memory devices **1160, 1180** and various other device subsystems **1201.** The electronic device **1000** may comprise a two-way RF communications device having voice and data communications capabilities. In addition, the electronic device 1000 may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the electronic device **1000** is intended to operate. For example, a electronic device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the electronic device **1000.** The electronic device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the electronic device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver 1500 and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600**, or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device 1000. In addition, the display 1600 may also be utilized in voice communications mode, for example to display the identity of a calling party, the duration of a voice call, or other voice call related information.

The short-range communications subsystem enables communication between the electronic device 1000 and other proximate systems or devices, which need not necessarily be similar devices. For example, the short-range communications subsystem **1020** may include an infrared device and associated circuits and components, near-field communication (NFC), or a Bluetooth^{™} communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A near-field communication (NFC) input device (40) comprising:
an NFC mouse pad (42) to be coupled to an electronic device (32) and comprising a first NFC device (46); and
an NFC mouse (41) configured to generate movement data based upon movement relative to said NFC mouse pad, and comprising a second NFC device (52) to wirelessly communicate the movement data to said first NFC device for the electronic device.

2. The NFC input device of Claim 1, wherein said first NFC device is configured to provide power via said second NFC device for said NFC mouse.

3. The NFC input device of Claim 1, wherein said NFC mouse further comprises:
a mouse housing (51); and
an optical sensing circuit (55) carried by said mouse housing, and coupled to said second NFC device, and configured to generate the movement data.

4. The NFC input device of Claim 1, wherein said first NFC device comprises a first NFC antenna (47) and a first NFC transceiver (48) coupled thereto.

5. The NFC input device of Claim 1, wherein said second NFC device comprises a second NFC antenna (53) and a second NFC transceiver (54) coupled thereto.

6. The NFC input device of Claim 1, wherein said NFC mouse pad comprises a free-standing substrate (45); and wherein said first NFC device is carried by said free-standing substrate.

7. The NFC input device of Claim 1, wherein said NFC mouse pad comprises a substrate (45) defining a panel of a case for the electronic device (31); and wherein said first NFC device is carried by said substrate.

8. A method of providing input to an electronic device (32) comprising:
coupling the electronic device to a near-field communication (NFC) mouse pad (42) comprising a first NFC device (46);
moving an NFC mouse relative to the NFC mouse pad to
generate movement data based upon the movement relative to the NFC mouse pad, and
wirelessly communicate the movement data to the first NFC device for the electronic device via a second NFC device (52) of the NFC mouse.

9. The method of Claim 8, wherein the first NFC device provides power via the second NFC device for the NFC mouse.

10. The method of Claim 8, wherein the NFC mouse further comprises:
a mouse housing (51); and
an optical sensing circuit (55) carried by the mouse housing, coupled to the second NFC device for generating the movement data.

11. The method of Claim 8, wherein the first NFC device comprises a first NFC antenna (47) and a first NFC transceiver (48) coupled thereto.

12. The method of Claim 8, wherein the second NFC device comprises a second NFC antenna (53) and a second NFC transceiver (54) coupled thereto.

13. The method of Claim 8, wherein the NFC mouse pad comprises a free-standing substrate (45); and wherein the first NFC device is carried by the free-standing substrate.

14. The method of Claim 8, wherein the NFC mouse pad comprises a substrate (45) defining panel of a case for the electronic device (31); and wherein the first NFC device is carried by the substrate.

## Amended claims

### Amended claims in accordance with Rule 137(2) EPC.

**1.** A near-field communication (NFC) input device (40) comprising:
an NFC mouse pad (42) to be coupled to a mobile wireless communications device (32) and comprising a first NFC device (46); and
an NFC mouse (41) configured to generate movement data based upon movement relative to said NFC mouse pad, and comprising a second NFC device (52) to wirelessly communicate the movement data to said first NFC device for the mobile wireless communications device.

**2.** The NFC input device of Claim 1, wherein said first NFC device is configured to provide power via said second NFC device for said NFC mouse.

**3.** The NFC input device of Claim 1, wherein said NFC mouse further comprises:
a mouse housing (51); and
an optical sensing circuit (55) carried by said mouse housing, and coupled to said second NFC device, and configured to generate the movement data.

**4.** The NFC input device of Claim 1, wherein said first NFC device comprises a first NFC antenna (47) and a first NFC transceiver (48) coupled thereto.

**5.** The NFC input device of Claim 1, wherein said second NFC device comprises a second NFC antenna (53) and a second NFC transceiver (54) coupled thereto.

**6.** The NFC input device of Claim 1, wherein said NFC mouse pad comprises a free-standing substrate (45); and wherein said first NFC device is carried by said free-standing substrate.

**7.** The NFC input device of Claim 1, wherein said NFC mouse pad comprises a substrate (45) defining a panel of a case for the mobile wireless communications device (31); and wherein said first NFC device is carried by said substrate.

**8.** A method of providing input to a mobile wireless communications device (32) comprising:
coupling the electronic device to a near-field communication (NFC) mouse pad (42) comprising a first NFC device (46);
moving an NFC mouse relative to the NFC mouse pad to
generate movement data based upon the movement relative to the NFC mouse pad, and
wirelessly communicate the movement data to the first NFC device for the mobile wireless communications device via a second NFC device (52) of the NFC mouse.

**9.** The method of Claim 8, wherein the first NFC device provides power via the second NFC device for the NFC mouse.

**10.** The method of Claim 8, wherein the NFC mouse further comprises:
a mouse housing (51); and
an optical sensing circuit (55) carried by the mouse housing, coupled to the second NFC device for generating the movement data.

**11.** The method of Claim 8, wherein the first NFC device comprises a first NFC antenna (47) and a first NFC transceiver (48) coupled thereto.

**12.** The method of Claim 8, wherein the second NFC device comprises a second NFC antenna (53) and a second NFC transceiver (54) coupled thereto.

**13.** The method of Claim 8, wherein the NFC mouse pad comprises a free-standing substrate (45); and wherein the first NFC device is carried by the free-standing substrate.

**14.** The method of Claim 8, wherein the NFC mouse pad comprises a substrate (45) defining panel of a case for the mobile wireless communications device (31); and wherein the first NFC device is carried by the substrate.
